# EUROPÄISCHE PATENTSCHRIFT

(11) **EP 0 704 412 B1**
(45) Veröffentlichungstag und Bekanntmachung des Hinweises auf die Patenterteilung: **28.07.1999**
(21) Anmeldenummer: 95109335.0
(22) Anmeldetag: 16.06.1995
(51) Int. Cl.: C04B 35/14, B01J 21/08

(54) **Presslinge auf Basis von pyrogen hergestellten Oxiden**
Pellets based on oxides produced by pyrogenation
Pièces pressées à base d'oxydes préparé par pyrogénation

(30) Priorität: 04.08.1994 DE 4427574
(43) Veröffentlichungstag der Anmeldung: 03.04.1996
(73) Patentinhaber: Degussa-Hüls Aktiengesellschaft, 45764 Marl (DE)
(72) Erfinder: Deller, Klaus, Dr., D-63512 Hainburg (DE); Krause, Helmfried, D-63517 Rodenbach (DE); Burmeister, Roland, Dr., D-63826 Geiselbach (DE)

(56) Entgegenhaltungen:
- EP-A- 0 327 722
- EP-A- 0 393 356

## Beschreibung

Die Erfindung betrifft Preßlinge auf Basis von pyrogen hergestellten Oxiden, das Verfahren zu seiner Herstellung und Verwendung.

Es ist bekannt, Preßlinge auf Basis von pyrogen hergestelltem Siliciumdioxid herzustellen (DE-A 39 12 504). Die bekannten Preßlinge weisen einen Außendurchmesser von 2 bis 15 mm und eine Bruchfestigkeit von 50 bis 150 N auf. Sie können als Katalysator bei der Hydratisierung von Ethylen zu Ethanol eingesetzt werden.

Die bekannten Preßlinge haben jedoch den Nachteil, daß bei ihrer Verwendung zum Beispiel als Katalysatoren bei der Ethylenhydratisierung in Festbettreaktoren zusätzliche Stütz-, Deck- oder Anströmschichten, zum Beispiel aus Kohle, Metallen, wie Kupfer, keramische Werkstoffe oder mineralische Stoffe, wie Mullit, eingesetzt werden müssen (vgl. Marshall Sittig, Handbook of Catalyst Manufacture, Noyes Data Corporation, USA 1978).

Durch die andere chemische Zusammensetzung der Stütz-, Deck- oder Anströmschichten werden Verunreinigungen, die gegebenenfalls zu unerwünschten Nebenreaktionen führen können, in die Reaktionsmischung eingetragen.

Es bestand somit die Notwendigkeit, ein Material für die Stütz-, Deck- oder Anströmschichten zu finden, das keine Verunreinigungen in die Reaktionsmischung einträgt, zu finden.

Gegenstand der Erfindung sind Preßlinge auf Basis von pyrogen hergestellten Oxiden, gekennzeichnet durch einen Außendurchmesser von 16 bis 100 mm, bevorzugt 20 bis 70 mm. Die Preßlinge können Tablettenform oder Kugelform aufweisen.

In einer bevorzugten Ausführungsform können die Preßlinge eine Kugelform aufweisen.

Die Bruchfestigkeit kann 1,5 bis 12,0 kN betragen.

Die Dichte kann von 0,5 bis 2,2 g/cm³ betragen.

Das Porenvolumen kann von 0,0 bis 1,5 ml/g betragen.

Als pyrogen hergestelltes Oxid kann Titandioxid, Aluminiumoxid und/oder Siliciumdioxid eingesetzt werden.

Als pyrogen hergestelltes Siliciumdioxid können in einer bevorzugten Ausführungsform Siliciumdioxide mit den folgenden physikalisch-chemischen Kenndaten eingesetzt werden:

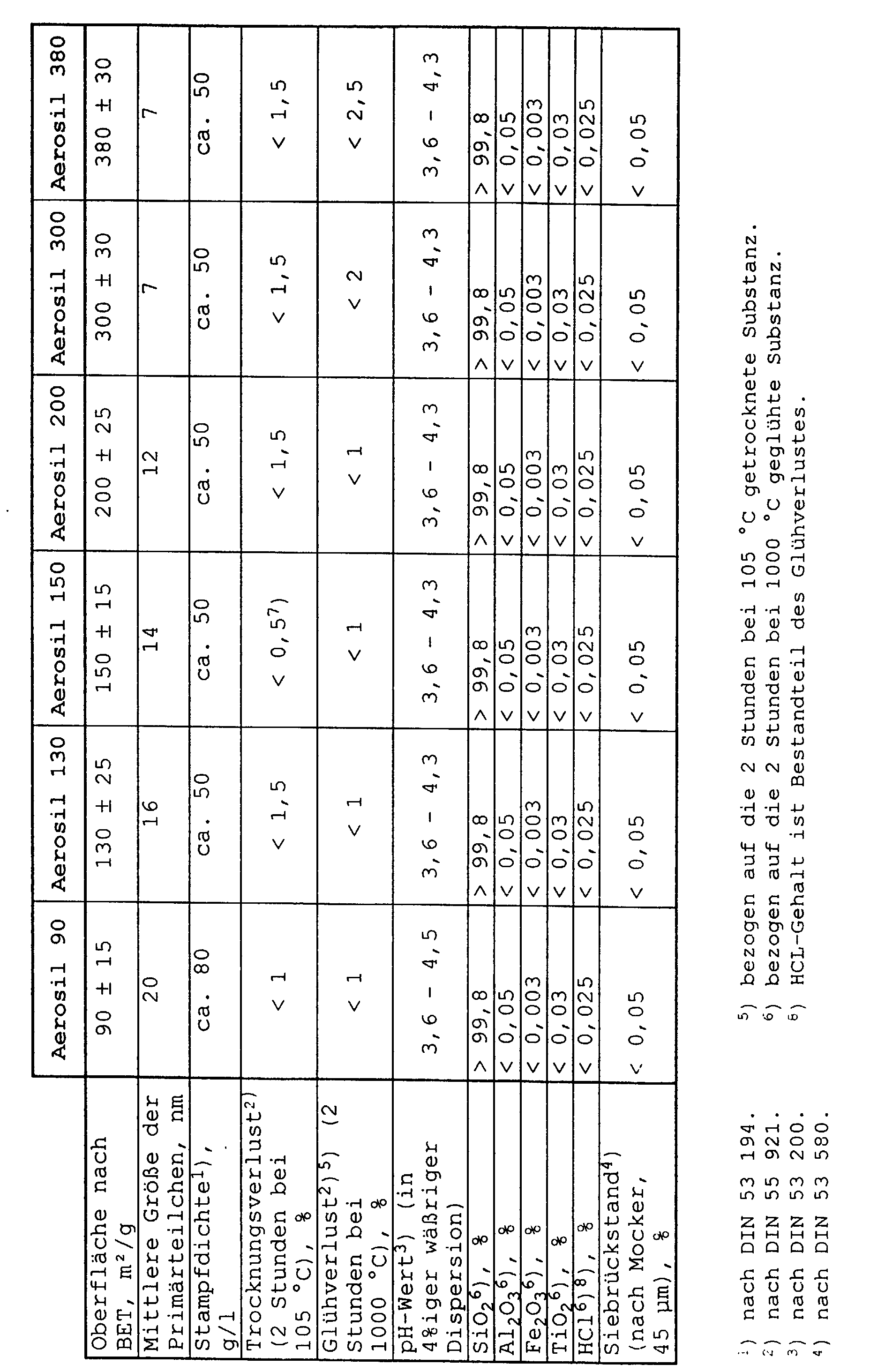

Zur Herstellung von AEROSIL wird in eine Knallgasflamme aus Wasserstoff und Luft eine flüchtige Siliciumverbindung eingedüst. In den meisten Fällen verwendet man Siliciumtetrachlorid. Diese Substanz hydrolysiert unter dem Einfluß des bei der Knallgasreaktion entstehenden Wassers zu Siliciumdioxid und Salzsäure. Das Siliciumdioxid tritt nach dem Verlassen der Flamme in eine sogenannte Koagulationszone ein, in der die AEROSIL-Primärteilchen und -Primäraggregate agglomerieren. Das in diesem Stadium als eine Art Aerosol vorliegende Produkt wird in Zyklonen von den gasförmigen Begleitsubstanzen getrennt und anschließend mit feuchter Heißluft nachbehandelt. Durch dieses Verfahren läßt sich der Rest-Salzsäuregehalt unter 0,025 % senken. Da das AEROSIL am Ende dieses Prozesses mit einer Schüttdichte von nur ca. 15 g/l anfällt, wird eine Vakuumverdichtung angeschlossen, mit der sich Stampfdichten von ca. 50 g/l und mehr einstellen lassen. Unter den pyrogen hergestellten Siliciumdioxiden kommt AEROSIL 200 wiederum eine bevorzugte Stellung zu.

Die erfindungsgemäßen Preßlinge können hergestellt werden, indem man pyrogen hergestelltes Oxid, Magnesiumstearat, Methylcellulose und Harnstoff in Gegenwart von Wasser miteinander vermischt, kompaktiert, trocknet, zu einem Pulver zerkleinert, das Pulver mittels einer isostatische Presse bei einem Druck von 2,5 bis 65 MPa (25 bis 650 bar), vorzugsweise 57 bis 61 MPa (570 bis 610 bar), oder mittels einer Axialpresse mit einer Preßkraft von 9,8 bis 490 kN (1 bis 50 t) zu Preßlingen verpreßt und die Preßlinge bei zeitlich abgestuften Temperaturen im Bereich von Raumtemperatur bis 1200 °C tempert.

Die Temperung, die bei zeitlich abgestuften Temperaturen durchgeführt wird, kann aus den folgenden Phasen bestehen:
Aufheizen während 60 ± 10 min auf 200 ± 20 °C,
Aufheizen während 120 ± 10 min auf 400 ± 20 °C,
Aufheizen während 120 ± 10 min auf 900 ± 20 °C,
Halten während 360 ± 10 min auf 400 ± 20 °C,
Abkühlen auf Raumtemperatur, gegebenenfalls Aufheizen während 120 ± 10 min auf 1000 ± 20 °C,
Halten während 240 ± 10 min auf 1000 ± 20 °C,
Abkühlen auf Raumtemperatur.

Die Komponenten der Ausgangsmischung können in den folgenden Mengenverhältnissen, bezogen auf die Gesamtmischung (gleich 100 %) miteinander vermischt werden:

| | |
|---|---|
| Pyrogen hergestelltes Oxid | 45 bis 88 % |
| Magnesiumstearat | 5 bis 15 % |
| Methylcellulose | 5 bis 20 % |
| Harnstoff | 2 bis 10 % |
| Wasser | 0 bis 10 % |

Die erfindungsgemäßen Preßlinge weisen vorteilhafterweise aufgrund der pyrogenen Provenienz des eingesetzten Oxides eine hohe chemische Reinheit auf. Diese Eigenschaft kommt bei dem Einsatz der erfindungsgemäßen Preßlinge vor allem dann zur Geltung, wenn sie bei der katalytischen Hydratisierung von Ethylen zu Ethanol in einem Festbettreaktor als Deck-, Stütz- oder Anströmschicht eingesetzt werden. Die Kontamination des Katalysators mit Verunreinigungen des Materials der Stütz-, Deck- oder Anströmschicht wird durch die hohe chemische Reinheit der Preßlinge ausgeschlossen. Nebenreaktionen, die die beabsichtigte katalytische Reaktion beeinträchtigen, treten bei der Verwendung der erfindungsgemäßen Preßlinge nicht auf.

Die erfindungsgemäßen Preßlinge weisen eine hohe Bruchfestigkeit bzw. Druckfestigkeit von bis zu ca. 9,8 kN (1 t), einen geringen Abrieb sowie eine hohe Elastizität auf. Diese Eigenschaften sind insbesondere während der Befüllung des Festbettreaktors sowie bei der mechanischen Belastung des Formkörpers bei der Druchführung der Reaktion von Bedeutung.

Die erfindungsgemäßen Preßlinge weisen ein Porenvolumen von bis zu 1,5 ml/g und keine Mikroporen, die kleiner als 3 nm sind, auf. Die Porengrößen liegen - gemessen nach DIN 66 133 - zwischen 5 und 25 nm mit einem ausgeprägten Maximum bei 18 nm. Sie ähneln damit den Preßlingen gemäß DE 39 12 504. Dies bedeutet, daß, wenn Preßlinge gemäß DE 39 12 504 als Katalysatoren eingesetzt werden, die erfindungsgemäßen Preßlinge gegebenenfalls zu der eigentlich beabsichtigten Festbettreaktion, zum Beispiel der katalytischen Hydratisierung von Ethylen zu Ethanol, einen erwünschten katalytischen Beitrag leisten können.

### Beispiele

### Beispiel 1

| | |
|---|---|
| 77,2 % | Aerosil® 200, |
| 7,3 % | Magnesiumstearat, |
| 11,6 % | Methylcellulose, |
| 3,9 % | Harnstoff |

werden unter Zusatz von Wasser kompaktiert, bei 100 °C 24 Stunden getrocknet, zu einem rieselfähigen Pulver zerkleinert und auf einer isostatischen Kugelpresse bei einem Druck von ca. 60 MPa (ca. 600 bar) zu Kugeln von ca. 57 mm Durchmesser verformt.

Diese Rohkugeln werden dann an Luft mit folgendem Temperaturverlauf kalziniert:
1. in 60 min auf 200 °C aufheizen, dann
2. in 120 min auf 400 °C aufheizen, dann
3. in 120 min auf 900 °C, dann
4. 360 min 900 °C halten, dann
5. abkühlen auf Raumtemperatur.

Die Stoffdaten der erhaltenen Preßlinge sind in der Tabelle I aufgeführt.

### Beispiel 2

Wie Beispiel 1, aber anschließend (nach Schritt 5):
6. in 120 min auf 1000 °C aufheizen,
7. 240 min auf 1000 °C halten, dann
8. abkühlen auf Raumtemperatur.

Die Stoffdaten der erhaltenen Preßlinge sind in der Tabelle I aufgeführt.

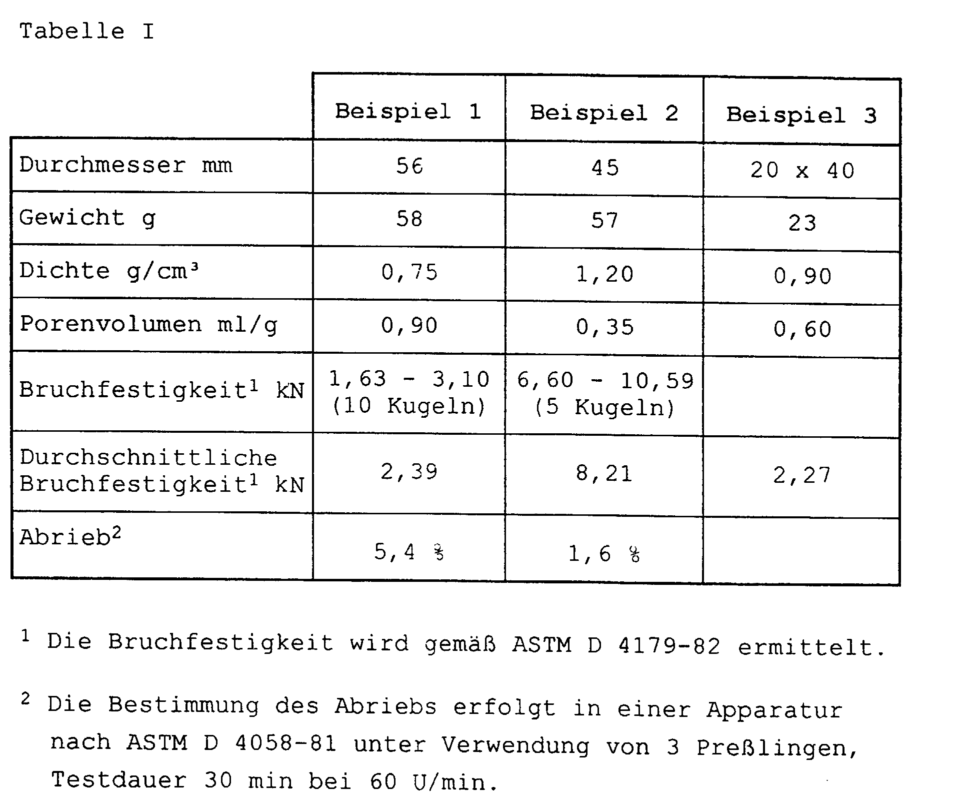

### Beispiel 3

Das Verformungsrohpulver gemäß Beispiel 1 wird nach der Kompaktierung, Trocknung und Zerkleinerung zu einem rieselfähigen Pulver auf einer Axialpresse unter Verwendung von zylinderischen Matrizen mit einem Durchmesser von 40 mm und einer Verformungskraft von 150 kN zu Tabletten mit 40 mm Durchmesser und 20 mm Höhe verformt. Die Tabletten werden an der Luft mit dem folgenden Temperaturverlauf kalziniert:
1. in 60 min auf 200 °C aufheizen, dann
2. in 120 min auf 400 °C aufheizen, dann
3. in 120 min auf 900 °C aufheizen, dann
4. 360 min auf 900 °C halten und dann
5. abkühlen auf Raumtemperatur.

Die Stoffdaten der erhaltenen Preßlinge sind in der Tabelle I aufgeführt.

## Patentansprüche

1. Preßlinge auf Basis von pyrogen hergestellten Oxiden, gekennzeichnet durch einen Außendurchmesser von 16 bis 100 mm.

2. Verfahren zur Herstellung der Preßlinge auf Basis von pyrogen hergestellten Oxiden nach Anspruch 1, dadurch gekennzeichnet, daß man pyrogen hergestelltes Oxid, Magnesiumstearat, Methylcellulose und Harnstoff in Gegenwart von Wasser miteinander vermischt, kompaktiert, trocknet, zu einem Pulver zerkleinert, das Pulver mittels einer isostatischen Presse bei einem Druck von 2,5 bis 65 MPa (25 bis 650 bar) oder mittels einer Axialpresse mit einer Preßkraft von 9,8 bis 490 kN (1 bis 50 t) zu Preßlingen verpreßt und die Preßlinge bei zeitlich abgestuften Temperaturen im Bereich von Raumtemperatur bis 1200 °C tempert.

3. Verwendung der Preßlinge nach Anspruch 1 als Stütz-, Deck- oder Anströmschicht bei Festbettreaktionen.

## Claims

1. Pellets based on pyrogenically produced oxides, characterised by an external diameter of from 16 to 100 mm.

2. Process for the production of pellets based on pyrogenically produced oxides according to claim 1, characterised in that pyrogenically produced oxide, magnesium stearate, methylcellulose and urea are mixed together in the presence of water, are compacted, dried, comminuted into a powder, the powder is compressed into pellets by means of an isostatic press at a pressure of 2.5 to 65 mPa (25 to 650 bar) or by means of an axial press at a force of pressure of 9.8 to 490 kN (1 to 50 t) and the pellets are tempered for timed periods at graded temperatures ranging from room temperature up to 1200°C.

3. Use of the pellets according to claim 1 as supporting layer, covering layer or flowing layer in fixed-bed reactions.

## Revendications

1. Pièces pressées à base d'oxydes préparés par pyrogénation, caractérisées par un diamètre extérieur compris entre 16 et 100 mm.

2. Procédé pour la fabrication des pièces pressées à base d'oxydes préparés par pyrogénation selon la revendication 1, caractérisé en ce qu'on mélange de l'oxyde préparé par pyrogénation, avec du stéarate de magnésium, de la méthylcellulose et de l'urée en présence d'eau, en ce qu'on compacte, sèche, broie en une poudre, en ce qu'on comprime la poudre à l'aide d'une presse isostatique à une pression de 2,5 à 65 MPa (25 à 650 bars) ou à l'aide d'une presse axiale à une force de compression de 9,8 à 490 kN (1 à 50 T) en des pièces pressées et en ce qu'on soumet les pièces pressées obtenues à un traitement thermique en augmentant graduellement et en fonction du temps les températures dans la plage allant de la température ambiante à 1200 °C.

3. Utilisation des pièces pressées selon la revendication 1 comme couche support, de recouvrement ou d'écoulement dans des réactions en lit fixe.
